# FASCICULE DE BREVET EUROPEEN

(11) **EP 0 688 405 B1**
(45) Date de publication et mention de la délivrance du brevet: **02.12.1998**
(21) Numéro de dépôt: 95907043.4
(22) Date de dépôt: 17.01.1995
(51) Int. Cl.: F16F 15/12

(54) **DOUBLE VOLANT AMORTISSEUR, NOTAMMENT POUR VEHICULE AUTOMOBILE**
DOPPELTER TORSIONSSCHWINGUNGSDÄMPFER, INSBESONDERE FÜR KRAFTFAHRZEUGE
DOUBLE FLYWHEEL, IN PARTICULAR FOR MOTOR VEHICLES

(30) Priorité: 18.01.1994 FR 9400467
(43) Date de publication de la demande: 27.12.1995
(73) Titulaire: VALEO, 75017 Paris (FR)
(72) Inventeur: LUCIENNE, Philippe, F-60300 Aumont (FR)
(74) Mandataire: Gamonal, Didier
(86) Numéro de dépôt international: FR9500052
(87) Numéro de publication internationale: WO9519512

(56) Documents cités:
- EP-A- 0 533 426
- DE-A- 4 118 686
- DE-C- 4 204 342
- GB-A- 2 244 543

## Description

L'invention concerne un double volant amortisseur, notamment pour véhicule automobile, du genre comportant deux masses coaxiales, l'une primaire, l'autre secondaire, qui sont montées rotatives l'une par rapport à l'autre, et dont une, la masse coaxiale secondaire, comporte un plateau formant le plateau de réaction d'un embrayage, avec, interposés circonférentiellement entre les masses coaxiales, des organes élastiques qui interviennent entre des moyens de guidage solidaires de la masse coaxiale primaire et un voile d'entraînement solidaire de la masse coaxiale secondaire.

Un tel double volant amortisseur, également dit volant divisé, est décrit notamment dans les documents DE-A-41 18 686 et DE-A-41 17 571 et GB-A-2 244 543 conforme au préambule de la revendication 1.

Dans le document DE-A-41 18 686, le voile d'entraînement, qui est en pratique une pièce en tôle, est en prise par un tronçon axial avec la tranche du plateau de la masse coaxiale secondaire, et, indépendamment d'un probable sertissage de ce tronçon axial sur cette tranche, il est pour l'essentiel solidarisé à ce plateau par des pattes qui, pliées à l'équerre au dos de celui-ci, y sont dûment boulonnées ou rivetées.

Outre qu'il en résulte une réalisation assez complexe pour le voile d'entraînement, il est nécessaire d'abattre annulairement par un dégagement le plateau à sa périphérie externe, pour loger à cet endroit les pattes du voile d'entraînement, au risque d'un amoindrissement de la résistance mécanique de ce plateau.

Dans le document DE-A-41 17 571, le voile d'entraînement s'étend radialement jusqu'à la périphérie interne du plateau, pour être fixé à celui-ci au voisinage de cette dernière.

Le voile d'entraînement s'insère ainsi axialement entre le plateau de la masse coaxiale secondaire et celui que comporte conjointement la masse coaxiale primaire, au détriment de l'encombrement axial de l'ensemble. Dans le document GB-A-2 244 543 (figure 5) le voile d'entraînement est solidaire d'un couvercle fixé par sertissage sur la tranche périphérique externe du plateau de la masse coaxiale secondaire, ledit plateau présentant pour ce faire une gorge au niveau de sa tranche externe. Cette gorge diminue localement la résistance mécanique du plateau de la masse secondaire coaxiale.

En outre, dans tous les cas, les organes élastiques sont tout entier disposés radialement au-delà de la tranche périphérique du plateau de la masse coaxiale secondaire, au détriment de l'encombrement diamétral de l'ensemble.

Si, pour réduire cet encombrement diamétral, on prévoit périphériquement au dos du plateau de la masse coaxiale secondaire un chanfrein définissant avec le plateau de la masse coaxiale primaire une chambre dans laquelle les organes élastiques peuvent au moins pour partie être engagés radialement, il en résulte, comme précédemment, un amoindrissement de la résistance mécanique du plateau de la masse coaxiale secondaire à sa périphérie externe.

Il est dès lors nécessaire de réaliser en fonte particulièrement résistante ce plateau, et, par exemple, en fonte relativement coûteuse de type GS, notamment lorsqu'il comporte annulairement un rebord à cette périphérie externe.

L'invention a pour objet un double volant amortisseur dans lequel un montage particulier du voile d'entraînement permet d'éviter ces inconvénients et conduit en outre à d'autres avantages.

Conformément à l'invention ce problème est résolu par la partie caractérisante de la revendication 1.

Il est ainsi tiré parti de ce voile d'entraînement pour renforcer la résistance mécanique de la masse coaxiale secondaire, et, plus précisément, celle de son plateau à la périphérie externe de celui-ci.

Il est dès lors avantageusement possible, sans qu'il soit nécessaire de réaliser ce plateau en fonte particulièrement résistante, de prévoir au dos de ce plateau un chanfrein permettant aux organes élastiques d'être au moins pour partie engagés radialement derrière lui, au bénéfice de l'encombrement diamétral de l'ensemble.

Le voile d'entraînement reste en outre avantageusement simple.

Avantageusement le voile d'entraînement est fretté par son tronçon axial sur le rebord de la masse secondaire servant à la fixation par vissage du couvercle de l'embrayage.

Grâce à l'invention, une faible épaisseur de matière peut exister entre les vis et le tronçon axial du voile, ce qui est favorable à l'augmentation de la taille radiale du disque de friction de l'embrayage.

Les avantages de l'invention ressortiront d'ailleurs de la description qui va suivre, à titre d'exemple, en référence aux dessins schématiques annexés sur lesquels :

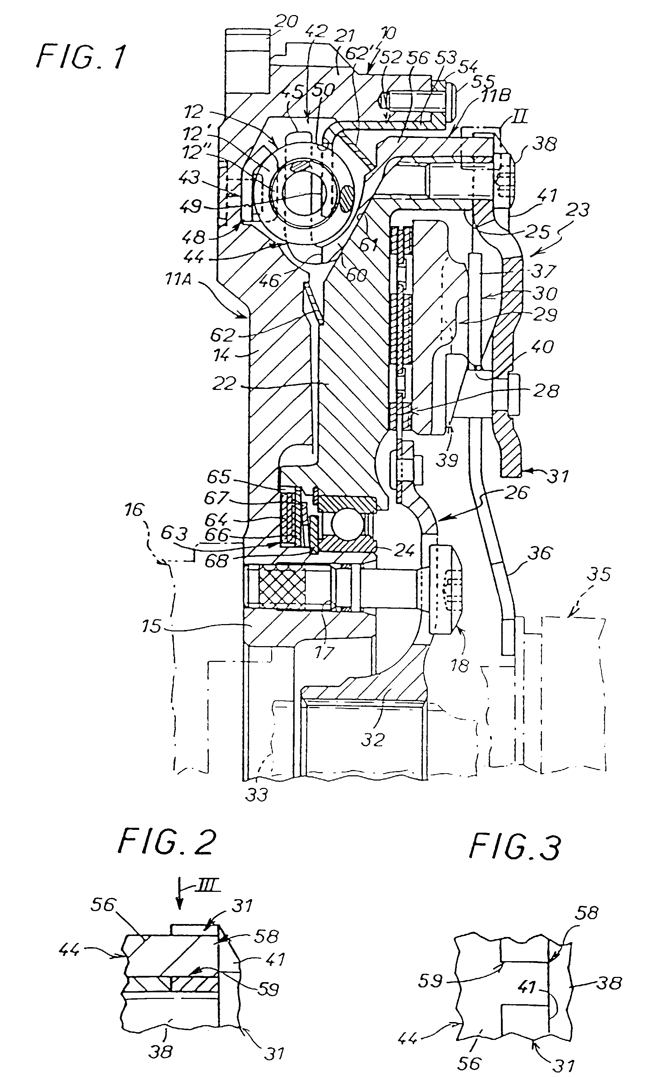

la figure 1 est une demi-vue en coupe axiale d'un double volant amortisseur suivant l'invention ;
la figure 2 reprend, à échelle supérieure, le détail de la figure 1 repéré par un encart II sur cette figure 1 ;
la figure 3 est, suivant la flèche de la figure 2, une vue partielle en plan du double volant amortisseur suivant l'invention.

Le double volant amortisseur 10 représenté sur ces figures est destiné à l'équipement d'un véhicule automobile. Il comporte deux masses coaxiales 11A, 11B, l'une primaire, l'autre secondaire, montées rotatives l'une par rapport à l'autre, avec, interposés circonférentiellement entre ces masses coaxiales 11A, 11B, suivant des dispositions décrites plus en détail ultérieurement, des organes élastiques 12.

La masse coaxiale 11A primaire comporte transversalement un plateau 14, qui, ici, est d'un seul tenant avec un moyeu 15 à sa périphérie interne.

Pour la fixation de l'ensemble à un arbre menant 16, en l'espèce l'arbre de sortie, ou vilebrequin, du moteur, ce moyeu 15 présente, circulairement, de place en place, des perçages 17 dans lesquels sont disposées en attente des vis 18.

Pour ce faire la vis 18 présente entre sa partie filetée et sa tête une partie lisse avec une collerette au voisinage de sa partie fileté. La collerette sert d'épaulement à un anneau en matière élastique monté entre la partie filetée et la collerette. L'anneau élastique est engagé à force (sous précontrainte) dans le perçage 17 et sert à retenir la vis.

A sa périphérie externe, le plateau 14 porte, ici, une couronne de démarreur 20, et il présente, annulairement, ici d'un seul tenant, un rebord 21 annulaire d'orientation axiale qui s'étend parallèlement à l'axe de l'ensemble.

La masse coaxiale 11B secondaire comporte, elle aussi, parallèlement au plateau 14 de la masse coaxiale 11A primaire, un plateau 22, et celui-ci forme le plateau de réaction d'un embrayage 23.

Par sa périphérie interne, le plateau 22 est centré sur le moyeu 15 de la masse coaxiale 11A primaire, par l'intermédiaire d'un roulement à billes 24 ou d'un quelconque autre palier, et, par exemple d'un palier lisse.

A sa périphérie externe, le plateau 22 présente, annulairement, ici d'un seul tenant, un rebord 25, qui, comme le rebord 21 du plateau 14 de la masse coaxiale 11A primaire, s'étend parallèlement à l'axe de l'ensemble.

L'embrayage 23 comporte une friction d'embrayage 26, dont le disque de friction 28 s'étend entre le plateau 22 et un plateau de pression 29 sollicité en permanence en direction du plateau 22 par un diaphragme 30 prenant appui sur un couvercle 31 solidaire du plateau 22, et qui comporte un moyeu 32 par lequel elle est destinée à être calée en rotation sur un arbre mené 33, en l'espèce l'arbre d'entrée de la boîte de vitesses.

Ainsi, la masse coaxiale 11A primaire est calée en rotation sur un arbre menant 16, tandis que, en service, lorsque l'embrayage 23 est engagé, la masse coaxiale 11B secondaire est calée en rotation sur un arbre mené 33 par l'intermédiaire de la friction d'embrayage 26.

Pour le désengagement de l'embrayage 23, une butée de débrayage 35 agit sur l'extrémité des doigts 36 du diaphragme 30.

S'agissant, ici, d'un embrayage 23 de type "poussé", la partie périphérique 37, formant rondelle Belleville, du diaphragme 30 porte sur le plateau de pression 29 suivant une circonférence de diamètre plus grand que celui de la circonférence suivant laquelle elle trouve un appui, primaire, sur le couvercle 31.

Ici, ce couvercle 31 est rapporté par des vis 38 sur le rebord 25 du plateau 22, en bout de ce rebord 25, sur la tranche de celui-ci, et, pour le montage basculant du diaphragme 30 sur ce couvercle 31, des colonnettes 39, qui fournissent un deuxième appui, secondaire, au diaphragme 30, du côté de celui-ci opposé au couvercle 31, sont rapportées sur ce couvercle 31, en étant ici rivetées à celui-ci, et en traversant par leur fût des passages 40 prévus à cet effet entre les doigts 36 du diaphragme 30 à la racine de ces doigts 36.

Ici, les vis 38 interviennent chacune à la faveur d'un embouti local 41 du couvercle 31.

Les organes élastiques 12 à action circonférentielle sont répartis circulairement autour de l'axe de l'ensemble.

Ils sont disposés dans une chambre 42, qui est globalement délimitée par le plateau 14 de la masse coaxiale 11A primaire, le rebord 21 de ce plateau 14, et la masse coaxiale 11B secondaire, suivant des dispositions décrites plus en détail ultérieurement, et ils interviennent circonférentiellement entre, d'une part, des moyens de guidage 43, qui sont solidaires de la masse coaxiale 11A primaire, et, d'autre part, suivant des dispositions également décrites plus en détail ultérieurement, un voile d'entraînement 44, qui est solidaire de la masse coaxiale 11B secondaire, et qui, perpendiculairement à l'axe de l'ensemble, présente un tronçon transversal 45 à la faveur duquel interviennent ces organes élastiques 12. Ce voile 44 est distinct du couvercle 31.

Ici, ce tronçon transversal 45 du voile d'entraînement 44 présente, circonférentiellement, de place en place, des évidements 46 dans chacun desquels s'étend circonférentiellement, avec ou sans jeu, un organe élastique 12.

Ici, ces évidements 46 sont des encoches, et les organes élastiques 12 comportent chacun, d'une part, un premier ressort 12', du type ressort à boudin, et, d'autre part, disposé coaxialement à l'intérieur de ce ressort 12', un deuxième ressort 12", également du type ressort à boudin.

Pour coopération avec les moyens de guidage 43 par leurs extrémités circonférentielles, les organes élastiques 12 débordent axialement de part et d'autre du tronçon transversal 45 du voile d'entraînement 44.

Ici, les moyens de guidage 43 comportent, d'un premier côté du tronçon transversal 45 du voile d'entraînement 44, des plots 48, qui sont rapportés de place en place, ici par rivetage, sur le plateau 14 de la masse coaxiale 11A primaire, et, de l'autre côté du tronçon transversal 45 du voile d'entraînement 44, une rondelle 49, qui, parallèle à ce tronçon transversal 45, présente, à l'image de celui-ci, des évidements 50 pour les organes élastiques 12.

Ici, cette rondelle 49 appartient d'un seul tenant à une pièce 52 qui, outre cette rondelle 49, comporte une virole 53, par laquelle elle est plaquée contre la surface interne du rebord 21 du plateau 14 de la masse coaxiale 11A primaire, et, en bout de cette virole 53, un rebord 54, qui s'étend perpendiculairement à l'axe de l'ensemble, en direction opposée à celui-ci, et par lequel elle est appliquée contre la tranche du rebord 21, en étant de place en place fixée à celui-ci par des vis 55.

Le voile d'entraînement 44 est fretté sur la masse coaxiale 11B secondaire à la périphérie externe de celle-ci.

Plus précisément suivant l'invention, il comporte un tronçon annulaire d'orientation axiale 56, c'est-à-dire un tronçon qui s'étend globalement parallèlement à l'axe de l'ensemble, et, par ce tronçon axial 56, il est fretté sur la masse coaxiale 11B secondaire, et, plus précisément, ici, sur le rebord 25 du plateau 22 de celle-ci. Le voile 44 est donc fretté sur la tranche externe du plateau 22.

Autrement dit, le voile d'entraînement 44 présente, autour du rebord 25 du plateau 22, à l'extérieur de celui-ci, un tronçon axial 56, et, au montage, il est engagé à chaud sur ce rebord 25 par ce tronçon axial 56.

Le voile d'entraînement 44 se trouve donc après refroidissement serré à force sur le rebord 25 du plateau 22, sur la périphérie externe de celui-ci, ce qui peut suffire à sa solidarisation en rotation à la masse coaxiale 11B secondaire.

On appréciera, grâce au rebord 25, que le tronçon axial 56 a une grande longueur ce qui est favorable pour la solidarisation du voile 44.

En outre une faible épaisseur de matière existe entre le tronçon 56 et les taraudages pratiqués dans le rebord 25 pour les vis de fixation 38.

D'une manière générale, grâce au tronçon axial 56 du voile 44 on peut réduire l'épaisseur du rebord 25 et donc augmenter la taille radiale du disque de friction 28.

On notera que le rebord 21 du plateau 14 de la première masse entoure en partie le tronçon 56 et le rebord 25 ce qui est favorable pour l'augmentation de l'inertie de la première masse 11A.

Pour conforter, cependant, cette solidarisation en rotation, le voile d'entraînement 44, distinct du couvercle 31 de l'embrayage 23, engrène, ici, avec ledit couvercle 31.

Ici, le tronçon axial 56 du voile d'entraînement 44, qui s'étend perpendiculairement au couvercle 31, rejoint à angle droit celui-ci en bout du rebord 25 du plateau 22, et il comporte, le long de sa tranche, une denture 58 par laquelle il est en prise avec une denture 59 complémentaire prévue à cet effet le long de la tranche du couvercle 31.

Les dentures 58, 59 peuvent s'étendre circulairement de manière continue tout au long du voile d'entraînement 44 et du couvercle 31.

Mais elles peuvent aussi bien n'intervenir circulairement que de place en place.

Ici, le voile d'entraînement 44 comporte, en outre, entre son tronçon transversal 45 et son tronçon axial 56, un s'étend en biais par rapport l'axe tronçon oblique 60, qui à de l'ensemble, en formant en section axiale un V avec le tronçon transversal 45, et, le plateau 22 de la masse coaxiale 11B secondaire présentant périphériquement, à son dos, de manière complémentaire, un chanfrein 61, ce tronçon oblique 60 du voile d'entraînement 44 s'étend au contact de ce chanfrein 61.

Ainsi, la chambre 42 dans laquelle sont disposés les organes élastiques 12 a, en section transversale, un profil en coin, et, à la faveur du chanfrein 61 du plateau 22 de la masse coaxiale 11B secondaire, elle s'étend radialement en direction de l'axe de l'ensemble, entre ce plateau 22 et le plateau 14 de la masse coaxiale 11A primaire. Cette chambre 42 est remplie partiellement de graisse pour lubrifier les ressorts 12.

Corollairement, les organes élastiques 12 sont au moins en partie engagés radialement derrière le plateau 22 de la masse coaxiale 11B secondaire, entre celui-ci et le plateau 14 de la masse coaxiale 11A primaire, à la faveur du chanfrein 61 du plateau 22.

Ici, ces organes élastiques 12 sont tout entier disposés radialement en deçà de la circonférence suivant laquelle s'étend la surface extérieure du tronçon axial 56 du voile d'entraînement 44.

En outre, la surface extérieure du tronçon oblique 60 de ce voile d'entraînement 44 se trouve ici profilée de manière convexe en section axiale, au contour des organes élastiques 12.

Ici une rondelle d'étanchéité 62 s'étend en oblique du plateau 14 de la masse coaxiale 11A primaire au plateau 22 de la masse coaxiale 11B secondaire, entre la chambre 42 et l'axe de l'ensemble, pour l'isolation à ce niveau de la chambre 42, et, de même, une rondelle d'étanchéité 62' s'étend en oblique de la pièce 52 formant la rondelle 49 au voile d'entraînement 44, pour l'isolation à ce niveau de cette chambre 42.

On appréciera qu'il est formé une portée d'appui inclinée pour la rondelle 62' dans la zone de raccordement du tronçon oblique 60 au tronçon axial 56 du voile 44. La configuration du voile 44 permet donc un montage aisé de la rondelle d'étanchéité 62'.

Ici, interviennent, également, entre les masses, coaxiales 11A, 11B, des moyens d'amortissement 63.

Ici, ces moyens d'amortissement 63 interviennent au niveau du roulement à billes 24. Ils comportent une rondelle de frottement 64 qui, à sa périphérie externe, comporte une denture par laquelle elle, engrène avec une denture 65 du plateau 22 de la masse coaxiale 11B secondaire.

Par l'intermédiaire d'une rondelle entretoise 66, cette rondelle de frottement 64 est soumise à l'action d'une rondelle élastique à action axiale 67, qui, en prenant appui sur la bague interne du roulement à billes 24 par l'intermédiaire d'une rondelle entretoise 68, la maintient plaquée contre le plateau 14 de la masse coaxiale 11A primaire, et qui, ici, est de forme générale tronconique.

Ici la rondelle 68 sert de butée à la bague interne du roulement à bille 24 et la rondelle 67 est calée en rotation sur le moyeu 15.

Par exemple, la rondelle 67 peut présenter de manière connu en soi, à sa périphérie l'interne des pattes engagées dans des rainures pratiquées à la périphérie externe du moyeu 15.

Bien entendu, la présente invention ne se limite pas à la forme de réalisation décrite et représentée, mais englobe toute variante d'exécution.

En particulier les ressorts 12 peuvent dans certain cas ne pas être lubrifiés en sorte que la présence des rondelles 62, 62, n'est pas obligatoire.

## Revendications

1. Double volant amortisseur, notamment pour véhicule automobile, du genre comportant deux masses coaxiales (11A, 11B), l'une primaire, l'autre secondaire, qui sont montées rotatives l'une par rapport à l'autre, et dont une, la masse coaxiale (11B) secondaire, comporte un plateau (22) formant le plateau de réaction d'un embrayage (23), avec, interposés circonférentiellement entre lesdites masses coaxiales (11A, 11B) des organes élastiques (12) qui interviennent entre des moyens de guidage (43) solidaires de la masse coaxiale (11A) primaire, et un voile d'entraînement (44) solidaire de la masse coaxiale (11B) secondaire, caractérisé en ce que le plateau (-22) de la masse coaxiale (11B) secondaire comporte annulairement à sa périphérie externe, un rebord (25), qui s'étend parallèlement à l'axe de l'ensemble et en ce que le voile d'entraînement (44) comporte un tronçon axial (56) par lequel il est fretté sur le rebord (25) de la masse coaxiale (11B) secondaire, à la périphérie externe de celle-ci.

2. Double volant amortisseur suivant la revendication 1, caractérisé en ce que, l'embrayage (23) associé au plateau (22) de la masse coaxiale (11B) secondaire comportant un couvercle (31) solidaire dudit plateau (22), le voile d'entraînement (44) est distinct du couvercle (31)

3. Double volant amortisseur selon la revendication 2, caractérisé en ce que le rebord (25) de la masse coaxiale (11B) secondaire est doté de taraudages pour des vis de fixation (38) du couvercle (31) à la masse coaxiale (11B) secondaire.

4. Double volant amortisseur selon la revendication 2 et 3 caractérisé en ce que le voile d'entraînement engrène avec ledit couvercle (31)

5. Double volant amortisseur suivant la revendication 4, caractérisé en ce que le tronçon axial (56) du voile d'entraînement (44) comporte le long de sa tranche une denture (58) par laquelle il est en prise avec une denture (59) complémentaire prévue à cet effet le long de la tranche du couvercle (31).

6. Double volant amortisseur suivant l'une quelconque des revendications 1 à 5, caractérisé en ce que, le voile d'entraînement (44) comportant un tronçon transversal (45), à la faveur duquel interviennent les organes élastiques (12), il comporte en outre, entre ce tronçon transversal (45) et son tronçon axial (56), un tronçon oblique (60), et, le plateau (22) de la masse coaxiale (11B) secondaire présentant périphériquement à son dos un chanfrein (61), ledit tronçon oblique (60) du voile d'entraînement (44) s'étend au contact dudit chanfrein (61).

7. Double volant amortisseur suivant la revendication 6, caractérisé en ce que les moyens élastiques (12) sont au moins en partie engagés radialement derrière le plateau (22) de la masse coaxiale (11B) secondaire, à la faveur du chanfrein (61) de ce plateau (22).

8. Double volant amortisseur suivant la revendication 6, caractérisé en ce que les organes élastiques (12) sont tout entier disposés radialement en deçà de la circonférence suivant laquelle s'étend la surface extérieure du tronçon axial (56) du voile d'entraînement (44).

9. Double volant selon l'une quelconque des revendications précédentes, caractérisé en ce que la masse coaxiale (11A) primaire comporte un plateau (14) s'étendant parallèlement au plateau de réaction (22) de la masse coaxiale (11B) secondaire et en ce que ledit plateau présente, annulairement, un rebord(21) d'orientation axiale, qui entoure le tronçon axial (56) du voile d'entraînement (44).

10. Double volant amortisseur selon les revendications 8 et 9, caractérisé en ce qu'une pièce (52), présentant une rondelle (49) appartenant aux moyens de guidage (43) des organes élastiques (12), est fixée sur le rebord (21) de la masse coaxiale (11A) primaire et en ce qu'une rondelle d'étanchéité (62') s'étend en oblique de ladite pièce (52) au voile d'entraînement (44) pour isolation d'une chambre étanche (42) dans laquelle dont disposés les organes élastiques (12).

## Patentansprüche

1. Zweimassen-Dämpfungsschwungrad, insbesondere für Kraftfahrzeuge, umfassend zwei koaxiale Schwungmassen (11A, 11B), eine Primär- und eine Sekundärschwungmasse, die drehbar im Verhältnis zueinander gelagert sind und von denen eine, die koaxiale Sekundärschwungmasse (11B), eine Platte (22) umfaßt, die die Gegenanpreßplatte einer Kupplung (23) bildet, mit umfangsmäßig zwischen den koaxialen Schwungmassen (11A, 11B) eingefügten elastischen Organen (12), die zwischen fest mit der koaxialen Primärschwungmasse (11A) verbundenen Führungsmitteln (43) und einer fest mit der koaxialen Sekundärschwungmasse (11B) verbundenen Mitnehmerscheibe (44) wirksam sind , **dadurch gekennzeichnet**, daß die Platte (22) der koaxialen Sekundärschwungmasse (11B) ringförmig an ihrem äußeren Umfang eine Randleiste (25) umfaßt, die sich parallel zur Achse der Baueinheit erstreckt, und daß die Mitnehmerscheibe (44) ein axiales Teilstück (56) umfaßt, durch das sie auf der Randleiste (25) der koaxialen Sekundärschwungmasse (11B) an deren äußerem Umfang aufgeschrumpft ist.

2. Zweimassen-Dämpfungsschwungrad nach Anspruch 1, wobei die mit der Platte (22) der koaxialen Sekundärschwungmasse (11B) verbundene Kupplung (23) einen fest mit der besagten Platte (22) verbundenen Deckel (31) umfaßt , **dadurch gekennzeichnet**, daß die Mitnehmerscheibe (44) vorgetrennt ist.

3. Zweimassen-Dämpfungsschwungrad nach Anspruch 2, **dadurch gekennzeichnet,** daß die Randleiste (25) der koaxialen Sekundärschwungmasse (11B) mit Gewinden für Befestigungsschrauben (38) zur Befestigung des Deckels (31) an der koaxialen Sekundärschwungmasse (11B) versehen ist.

4. Zweimassen-Dämpfungsschwungrad nach Anspruch 2 und 3, **dadurch gekennzeichnet,** daß die Mitnehmerscheibe mit dem besagten Deckel (31) im Eingriff steht.

5. Zweimassen-Dämpfungsschwungrad nach Anspruch 4, **dadurch gekennzeichnet,** daß das axiale Teilstück (56) der Mitnehmerscheibe (44) entlang seiner Kante eine Zahnung (58) umfaßt, durch die es an einer formschlüssigen Zahnung (59) eingreift, die dazu entlang der Kante des Deckels (31) vorgesehen ist.

6. Zweimassen-Dämpfungsschwungrad nach einem der Ansprüche 1 bis 5,**dadurch gekennzeichnet**, daß die Mitnehmerscheibe (44), die ein Querteilstück (45) umfaßt, über das die elastischen Organe (12) wirksam werden, außerdem zwischen diesem Querteilstück (45) und seinem axialen Teilstück (56) ein Schrägteilstück (60) umfaßt und, während die Platte (22) der koaxialen Sekundärschwungmasse (11B) umfangsmäßig an ihrem Rücken eine Abschrägung (61) aufweist, das besagte Schrägteilstück (60) der Mitnehmerscheibe (44) in Kontakt mit der besagten Abschrägung (61) verläuft.

7. Zweimassen-Dämpfungsschwungrad nach Anspruch 6, **dadurch gekennzeichnet**, daß die elastischen Mittel (12) zumindest teilweise radial hinter der Platte (22) der koaxialen Sekundärschwungmasse (11B) mittels der Abschrägung (61) dieser Platte (22) eingesetzt sind.

8. Zweimassen-Dämpfungsschwungrad nach Anspruch 6, **dadurch gekennzeichnet**, daß die elastischen Mittel (12) vollständig radial vor dem Kreisumfang angeordnet sind, auf dem sich die Außenfläche des axialen Teilstücks (56) der Mitnehmerscheibe (44) erstreckt.

9. Zweimassen-Dämpfungsschwungrad nach einem der vorangehenden Ansprüche , **dadurch gekennzeichnet**, daß die koaxiale Primärschwungmasse (11A) eine Platte (14) umfaßt, die sich parallel zur Gegenanpreßplatte (22) der koaxialen Sekundärschwungmasse (11B) erstreckt, und daß die besagte Platte ringförmig eine axial ausgerichtete Randleiste (21) aufweist, die das axiale Teilstück (56) der Mitnehmerscheibe (44) umgibt.

10. Zweimassen-Dämpfungsschwungrad nach den Ansprüchen 8 und 9, **dadurch gekennzeichnet**, daß ein Teil (52), das eine Scheibe (49) aufweist, die zu den Führungsmitteln (43) der elastischen Organe (12) gehört, an der Randleiste (21) der koaxialen Primärschwungmasse (11A) befestigt ist und daß sich eine Dichtungsscheibe (62') schräg von dem besagten Teil (52) zur Mitnehmerscheibe (44) erstreckt, um eine dichte Kammer (42) zu isolieren, in der die elastischen Organe (12) angeordnet sind.

## Claims

1. A damped double flywheel, especially for a motor vehicle, of the kind comprising two coaxial masses (11A, 11B), one primary and the other secondary, which are mounted for rotation of one with respect to the other, and one of which, namely the secondary coaxial mass (11B), comprises a plate (22) that constitutes the reaction plate of a clutch (23), with, interposed circumferentially between the said coaxial masses (llA, 11B), resilient members (12) which work between guide means (43) fixed to the primary coaxial mass (llA), and a drive plate (44) which is fixed to the secondary coaxial mass (11B), characterised in that the plate (22) of the secondary coaxial mass (11B) has, at its outer periphery, an annular flange (25) which extends parallel to the axis of the assembly, and in that the drive plate (44) includes an axial portion (56) by which it is shrunk on the flange (25) of the secondary coaxial mass (llB) at the outer periphery of the latter.

2. A damped double flywheel according to Claim 3, characterised in that the clutch (23) associated with the plate (22) of the secondary coaxial mass (11B) includes a cover plate (31) fixed to the said plate (22), and the drive plate (44) is distinct from the cover plate (31).

3. A damped double flywheel according to Claim 2, characterised in that the flange (25) of the secondary coaxial mass (11B) is threaded for screws (38) for fastening the cover plate (31) to the secondary coaxial mass (11B).

4. A damped double flywheel according to Claims 2 and 3, characterised in that the drive plate meshes with the said cover plate (31).

5. A damped double flywheel according to Claim 4, characterised in that the axial portion (56) of the drive plate (44) includes along its end face a set of teeth (58), by which it is in engagement with a complementary set of teeth (59) arranged for that purpose along the radial face of the cover plate (31).

6. A damped double flywheel according to any one of Claims 1 to 5, characterised in that the drive plate (44), which includes a transverse portion (45) on which the resilient members (12) act, further includes an oblique portion (60) between the said transverse portion (45) and its axial portion (56), while the plate (22) of the secondary coaxial mass (11B) has a peripheral inclined surface (61) on its back face, and the said oblique portion (60) of the drive plate (44) lies in contact with the said inclined surface (61).

7. A damped double flywheel according to Claim 6, characterised in that the resilient means (12) are at least partly engaged radially behind the plate (22) of the secondary coaxial mass (11B) by virtue of the inclined surface (61) of the said plate (22).

8. A damped double flywheel according to Claim 6, characterised in that the resilient members (12) are disposed entirely radially inwards of the circumference along which the outer surface of the axial portion (56) of the drive plate (44) extends.

9. A double flywheel according to any one of the preceding Claims, characterised in that the primary coaxial mass (llA) includes a plate (14) lying parallel to the reaction plate (22) of the secondary coaxial mass (11B), and in that the said plate has an annular, axially orientated, flange (21) which surrounds the axial portion (56) of the drive plate (44).

10. A damped double flywheel according to Claims 8 and 9, characterised in that a member (52), including a ring portion (49) which is part of the means (43) for guiding the resilient members (12), is fixed on the flange (21) of the primary coaxial mass (llA), and in that a sealing ring (62') extends obliquely from the said member (52) to the drive plate (44) so as to isolate a sealed chamber (42) in which the resilient members (12) are disposed.
